# EUROPEAN PATENT APPLICATION

(11) **EP 4 415 303 A1**
(43) Date of publication of application: **14.08.2024**
(21) Application number: 23211871.1
(22) Date of filing: 23.11.2023
(51) Int. Cl.: H04L 9/00, H04L 9/32, G06Q 10/0833, H04L 9/40

(54) **LOGISTICS MANAGEMENT METHOD AND APPARATUS USING BLOCKCHAIN**

(30) Priority: 09.02.2023 KR 20230017220
(71) Applicant: IUCF-HYU (INDUSTRY-UNIVERSITY COOPERATION FOUNDATION HANYANG UNIVERSITY), Seoul 04763 (KR)
(72) Inventor: OH, Hyun Ok, 04763 Seoul (KR); KIM, Jong Ho, 04763 Seoul (KR); LEE, Jun Hee, 04763 Seoul (KR)
(74) Representative: Prüfer & Partner mbB Patentanwälte · Rechtsanwälte

(57) **Abstract**

Disclosed is a logistics management method and apparatus using a blockchain, in which a logistics movement path can be tracked while privacy for logistics information is ensured. The disclosed logistics management method using a blockchain includes generating first transaction information for registration of a target unit including at least one child unit, transmitting the first transaction information to a blockchain network, generating second transaction information according to transfer of ownership of the target unit, and transmitting the second transaction information to the blockchain network.

## Description

### CROSS-REFERENCE TO RELATED APPLICATION

This application claims priority to and the benefit of Korean Patent Application No. 2023-0017220, filed on February 9, 2023, the disclosure of which is incorporated herein by reference in its entirety.

### BACKGROUND

### 1. Field of the Disclosure

The present disclosure relates to a logistics management method and apparatus using a blockchain, and more specifically, to a logistics management method and apparatus capable of tracking a logistics movement path while ensuring the privacy of logistics information.

### 2. Discussion of Related Art

A blockchain is a distributed database that stores data in blocks and connects the blocks in the form of a chain. The concept of a blockchain was first introduced in the paper "Bitcoin: A Peer-to-Peer Electronic Cash System" published by Satoshi Nakamoto, and has continued to develop, changing from the initially presented system to various types of systems. Currently, blockchain technology is being utilized in various industrial fields including the field of logistics.

When a blockchain is applied in the field of logistics, end consumers can easily receive product logistics information from a blockchain network and confirm a path from a product manufacturer to the end consumer, thereby easily determining the authenticity of the product. However, due to the characteristics of a blockchain, not only the end consumer who actually purchased the product but also third parties can check the logistics information. Therefore, it is essential to find ways to ensure the privacy of logistics information.

To this end, logistics systems using closed or permissioned blockchains are being developed, but in these logistics systems, end consumers cannot directly check the logistics information to determine the authenticity of the product, and must rely on information provided by the manufacturer.

Therefore, there is a need for a logistics management method that ensures privacy of logistics information and allows end consumers to easily track a logistics movement path.

### SUMMARY OF THE DISCLOSURE

The present disclosure is directed to providing a blockchain-based logistics management method and apparatus.

In particular, the present disclosure is also directed to providing a logistics management method and apparatus capable of tracking a logistics movement path while ensuring privacy for logistics information.

According to an aspect of the present disclosure, there is provided a logistics management method using a blockchain, including generating first transaction information for registration of a target unit including at least one child unit; transmitting the first transaction information to a blockchain network; generating second transaction information according to transfer of ownership of the target unit; and transmitting the second transaction information to the blockchain network.

In addition, according to another aspect of the present disclosure, there is provided a logistics management method using a blockchain, including generating first transaction information for registration of a target unit including at least one product; transmitting the first transaction information to a blockchain network; generating second transaction information according to transfer of ownership of the target unit; and transmitting the second transaction information to the blockchain network.

In addition, according to still another aspect of the present disclosure, there is provided a logistics management method using a blockchain, including a communication unit; a memory; and at least one processor electrically connected to the memory, wherein the processor generates first transaction information for registration of a target unit including at least one product and second transaction information for transfer of ownership of the target unit, and the communication unit transmits the first and second transaction information to a blockchain network.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a diagram illustrating a logistics management system using a blockchain according to one embodiment of the present disclosure;
FIG. 2 is a diagram illustrating a logistics management method using a blockchain according to one embodiment of the present disclosure;
FIG. 3 is a diagram illustrating transaction information according to a logistics movement stage; and
FIG. 4 is a diagram illustrating a logistics management method using a blockchain according to another embodiment of the present disclosure.

### DETAILED DESCRIPTION OF EXEMPLARY EMBODIMENTS

Since the present disclosure can undergo various changes and have various embodiments, specific embodiments will be illustrated in the drawings and described in the detailed description. However, this is not intended to limit the present disclosure to specific embodiments, and it should be understood that it includes all modifications, equivalents, and substitutes included in the spirit and scope of the present disclosure. In describing each drawing, reference numerals refer to like elements.

Hereinafter, embodiments according to the present disclosure will be described in detail with reference to the attached drawings.

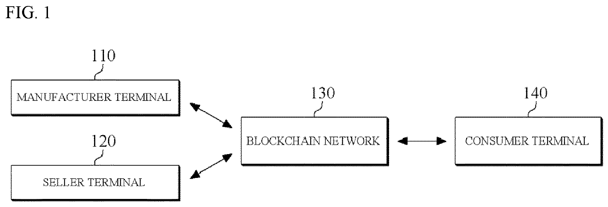

FIG. 1 is a diagram illustrating a logistics management system using a blockchain according to one embodiment of the present disclosure.

Referring to FIG. 1, a logistics management system according to one embodiment of the present disclosure includes a manufacturer terminal 110, a seller terminal 120, a blockchain network 130, and a consumer terminal 140.

In general, products manufactured by a manufacturer are sent to consumers through a seller, and therefore the logistics stages may consist of product registration, sending the product to the seller, product unpacking, and product sale. The product registration means registration in a logistics management system for logistics management of manufactured products, and the product unpacking means opening the sent products from a packaging box before the products are sold. Information about each logistics stage is stored in the blockchain network 130 as transaction information, and the transaction information includes ownership information about the product. The ownership information may be included in the transaction information in the form of ciphertext.

The manufacturer terminal 110 transmits transaction information for registration of the manufactured product to the blockchain network 130. At the product registration stage, ownership of the product is held by the manufacturer.

Next, when the product is sent from the manufacturer to the seller, the manufacturer terminal 110 transmits transaction information on the product sent to the seller to the blockchain network 130. As the product is sent to the seller, the ownership is transferred from the manufacturer to the seller.

The seller unpacks the sent product, and the seller terminal 120 transmits transaction information on product unpacking to the blockchain network 130. At the product unpacking stage, the ownership is held by the manufacturer.

Next, when the consumer purchases the unpacked product, the seller terminal 120 transmits transaction information about product sale to the blockchain network 130. The ownership of the sold product is held by the consumer.

The transaction information includes a decryption key that allows the consumer to decrypt encrypted ownership information. Therefore, the consumer terminal 140 uses the decryption key to decrypt the encrypted ownership information from the transaction information provided from the blockchain network 130. The consumer may confirm the ownership of the product at each logistics stage to determine that the product is genuine and manufactured by the manufacturer.

The manufacturer or seller may also decrypt the encrypted ownership information and track the history of changes in the ownership of the product.

In addition, one embodiment of the present disclosure uses a zero-knowledge proof algorithm such as zero-knowledge Succinct Non-interactive Arguments of Knowledge (zk-SNARK) to ensure the privacy of such transaction information. The transaction information may include a zero-knowledge proof value to verify the validity of the transaction information. Here, the blockchain network 130 verifies the validity of the transaction information using the zero-knowledge proof value, and stores the transaction information in the blockchain network 130 when verification is completed.

In this way, according to one embodiment of the present disclosure, the privacy of the transaction information may be ensured using the encrypted ownership information and the zero-knowledge proof algorithm, and the consumer may track the logistics movement path to confirm the authenticity of the product by providing the owner with the key with which the encrypted ownership information can be decrypted.

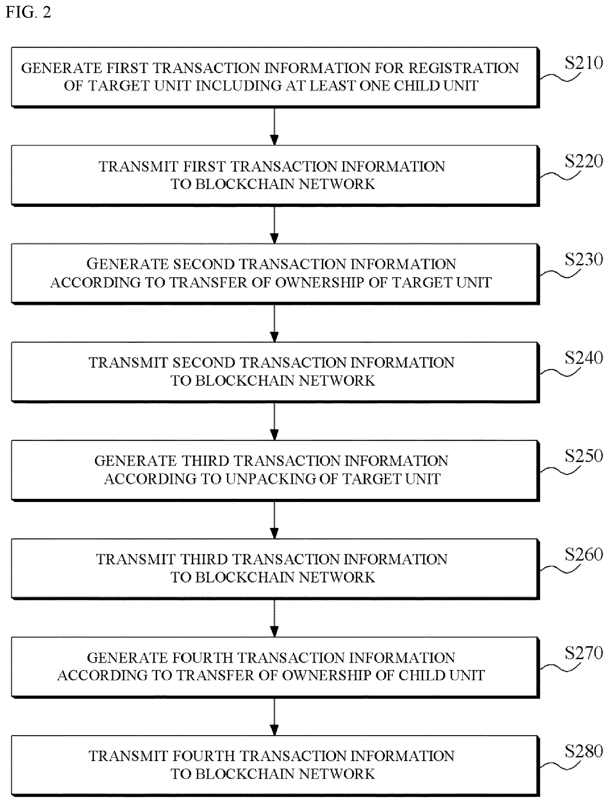

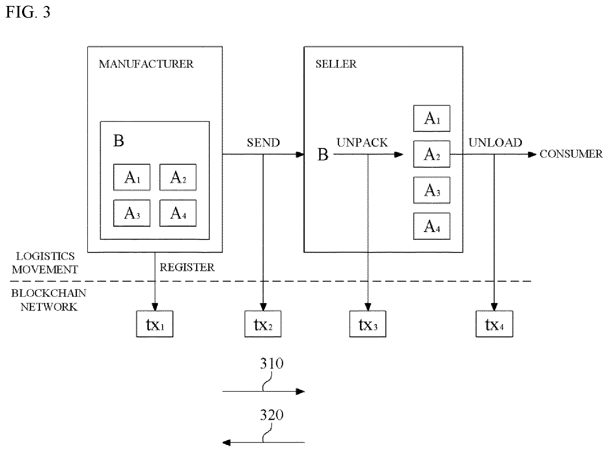

FIG. 2 is a diagram illustrating a logistics management method using a blockchain according to one embodiment of the present disclosure, and FIG. 3 is a diagram illustrating transaction information according to a logistics movement stage.

A logistics management method according to one embodiment of the present disclosure is performed by a logistics management apparatus including a communication unit, a memory, and at least one processor, and the logistics management apparatus is an example of a computing device. The logistics management apparatus is an entity included in a logistics management system and may be a manufacturer terminal or a seller terminal. The communication unit transmits and receives data to and from a server, and the processor electrically connected to the memory performs a series of processes for the logistics management method, including generating transaction information.

Referring to FIGS. 2 and 3, the computing device according to one embodiment of the present disclosure generates first transaction information tx₁ for registration of a target unit including at least one child unit in operation S210, and transmits the first transaction information tx₁ to a blockchain network in operation S220.

Here, the term "unit" refers to a product or a group of products that are subjected to logistics management, and the unit may include at least one parent unit or child unit. As shown in FIG. 3, when a group of products such as A₁ to A₄, manufactured by the manufacturer, is packaged as B for sending, B may be a target unit, and A₁ to A₄ may be child units of the target unit. B is the parent unit of A₁ to A₄.

Identification information on a unit, a forward key, and a backward key are assigned to the unit. When a unit corresponds to each product, an identification number such as an ID of the product may be assigned as the identification number of the unit, and when a parent unit includes child units, an identification number of the parent unit may be generated from a combination of the identification numbers of the child units.

In addition, the forward key and backward key are information used to track the logistics movement of the unit, and the backward key may be generated from the forward key. As an example, the backward key may be a kind of hash value that can be obtained by inputting the forward key of the unit into a one-way function, such as a hash function.

The forward key of the child unit may be generated from the forward key of the parent unit. As an example, the forward key of the child unit may be obtained by inputting the identification information of the child unit and the forward key of the parent unit into a one-way function such as a hash function.

The first transaction information tx₁ includes a commitment value for the target unit and a first ciphertext. The commitment value for the target unit includes identification information on the target unit, a forward key for the target unit, ownership information on the target unit, and unpacking information for the target unit. The commitment value is a kind of hash value for the identification information on the target unit, the forward key for the target unit, the ownership information on the target unit, and the unpacking information for the target unit, and may be generated by various commitment value generation algorithms such as Pedersen commitment. The commitment value is used to identify forgery or alteration of the plaintext of the first ciphertext.

The first ciphertext for the target unit is ciphertext including identification information on the target unit, a commitment value for the target unit, an opening key for the commitment value, ownership information on the target unit, and logistics stage information on the target unit. The opening key is a kind of key used to generate the commitment value and is used to confirm the validity of the commitment value, and the logistics stage information includes information indicating that the product has been registered.

The first ciphertext is ciphertext encrypted with the backward key for the target unit, and may be decrypted using the backward key for the target unit. The ownership information on the target unit includes ownership information on not only the target unit but also child units included in the target unit. In the example of FIG. 3, the ownership information on the target unit and child unit includes information indicating that the manufacturer has ownership.

Referring again to FIG. 2, the computing device generates second transaction information tx₂ according to the transfer of ownership of the target unit in operation S230, and transmits the second transaction information tx₂ to the blockchain network in operation S240.

As illustrated in FIG. 3, when the target unit moves from the manufacturer to the seller, the ownership of the target unit is transferred from the manufacturer to the seller, and the computing device generates the second transaction information tx₂ according to this transfer of ownership.

The second transaction information tx₂ includes first ciphertext and a commitment value for the target unit, in which ownership information and logistics stage information on the target unit are updated and includes second ciphertext for the forward key of the target unit. The updated ownership information includes information indicating that the ownership of the target unit and child unit belongs to the seller, and the updated logistics stage information includes information indicating that the product is sent to the seller.

The second ciphertext is ciphertext for providing the forward key of the target unit to a new owner, and is ciphertext that is encrypted with a public key of the owner of the target unit and decrypted with a private key of the owner. In the example shown in FIG. 3, since the owner according to the transfer of ownership of the target unit is the seller, the second ciphertext may be encrypted with a public key of the seller and decrypted with a private key of the seller.

Referring again to FIG. 2, the computing device may generate third transaction information tx₃ according to unpacking of the target unit in operation S250, and transmit the third transaction information tx₃ to the blockchain network in operation S260.

As illustrated in FIG. 3, when the seller unpacks the target unit, the computing device generates third transaction information tx₃ and transmits the generated third transaction information tx₃ to the blockchain network. The third transaction information tx₃ includes second ciphertext for the forward key of the target unit and includes first ciphertext and a commitment value for the target unit in which unpacking information and logistics stage information on the target unit are updated. Since the seller retains ownership of the target unit even after unpacking the target unit, the ownership information is not updated, and the first ciphertext and the commitment value in which the unpacking information and the logistics stage information are updated are included in the third transaction information tx₃. Here, the logistics stage information includes information indicating that the product has been unpacked.

Referring again to FIG. 2, the computing device may generate fourth transaction information tx₄ according to the transfer of ownership of a child unit in operation S270, and transmit the fourth transaction information tx₄ to a blockchain network in operation S280.

As illustrated in FIG. 3, when the seller sells one of child units A₁ to A₄ to a consumer, the computing device generates fourth transaction information tx₄ and transmits the fourth transaction information tx₄ to the blockchain network. The fourth transaction information tx₄ includes a commitment value and first ciphertext for the child unit, and third ciphertext for a backward key of the target unit, as well as second ciphertext for a forward key of the child unit.

The commitment value for the child unit includes identification information on the child unit, a forward key for the child unit, and ownership information on the child unit, and the first ciphertext for the child unit includes identification information on the child unit, a commitment value for the child unit, an opening key for the commitment value of the child unit, ownership information on the child unit, and logistics stage information on the child unit. The ownership information on the child unit includes information indicating that ownership of the child unit belongs to the consumer, and the logistics stage information includes information indicating that the child unit has been sold (unloaded).

As in the first ciphertext for the parent unit, the first ciphertext for the child unit is decrypted with a backward key for the child unit, and the backward key for the child unit may be generated from the forward key for the child unit. The second ciphertext for the child unit is encrypted with a public key of the owner of the child unit and decrypted with a private key of the owner. In the example illustrated in FIG. 3, the second ciphertext may be encrypted with a public key of the consumer and decrypted with a private key of the consumer.

In addition, the third ciphertext for the backward key of the target unit is ciphertext encrypted with the backward key for the child unit, and may be decrypted with the backward key for the child unit.

The second to fourth transaction information tx₂ to tx₄ may further include a zero-knowledge proof value to verify its validity, and may further include a value to prevent reuse of the transaction information according to embodiments. The second to fourth transaction information tx₂ to tx₄ may be transmitted to the blockchain network through the communication unit, and when the validity of the second to fourth transaction information tx₂ to tx₄ is verified, the second to fourth transaction information tx₂ to tx₄ may be stored in the blockchain network.

Meanwhile, as described above, the consumer may use the key included in the ciphertext to track the logistics movement path of the purchased product in a reverse direction 320, thereby confirming the authenticity of the purchased product. The consumer may receive the fourth transaction information tx₄ from the blockchain network, decrypt the second ciphertext included in the fourth transaction information tx₄ using a private key of the consumer, and acquire the forward key for the child unit. Next, the consumer may acquire the backward key for the child unit from the forward key for the child unit to decrypt the first ciphertext included in the fourth transaction information tx₄, thereby confirming he ownership information of the child unit included in the first ciphertext. Next, the consumer may acquire the backward key for the target unit by decrypting the third ciphertext using the backward key for the child unit, and confirm the ownership information of the target unit included in the first ciphertext by decrypting the first ciphertext included in the first to third transaction information tx₁ to tx₃ using the backward key for the target unit. Through this backtracking, the consumer can confirm that the product purchased by the consumer was manufactured by the manufacturer.

Conversely, the manufacturer may manage the logistics movement of the unit by tracking the logistics movement path in a forward direction 310. The manufacturer may use the forward key of the target unit to acquire the backward key of the target unit, and use the backward key of the target unit to decrypt the first ciphertext included in the second and third transaction information tx₂ and tx₃, thereby confirming the ownership information of the target unit included in the first ciphertext. Next, the manufacturer may use the forward key of the target unit and the identification information of the child unit to acquire the forward key of the child unit, acquire the backward key of the child unit from the forward key of the child unit, and then use the backward key of the child unit to decrypt the first ciphertext included in the fourth transaction information tx₄, thereby confirming the ownership information of the child unit included in the first ciphertext. Accordingly, the manufacturer can manage the transfer of the ownership of the target unit and child unit.

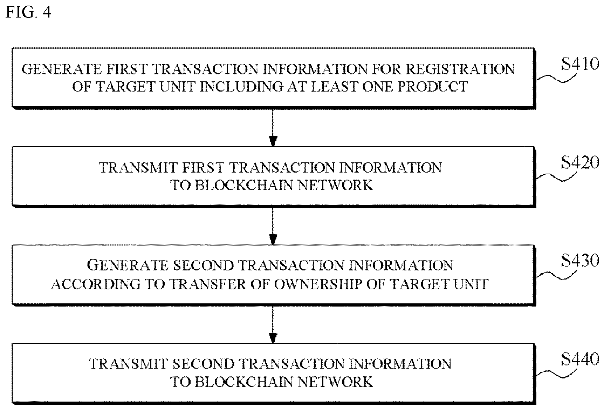

FIG. 4 is a diagram illustrating a logistics movement management method according to another embodiment of the present disclosure.

Referring to FIG. 4, a computing device according to one embodiment of the present disclosure generates first transaction information for registration of a target unit including at least one product in operation S410, and transmits the first transaction information to a blockchain network in operation S420. Next, the computing device generates second transaction information according to the transfer of ownership of the target unit in operation S430, and transmits the second transaction information to the blockchain network in operation S440. Here, the ownership of the target unit can be transferred directly from a manufacturer to a consumer.

The first transaction information includes a commitment value and first ciphertext for the target unit, and the commitment value includes identification information, a forward key, and ownership information for the target unit. The first ciphertext for the target unit includes identification information for the target unit, a commitment value for the target unit, an opening key for the commitment value for the target unit, and ownership information on the target unit.

The second transaction information includes second ciphertext for the forward key of the target unit and includes the commitment value and first ciphertext for the target unit in which the ownership information on the target unit is updated.

The first ciphertext is ciphertext that is encrypted with the backward key for the target unit, and may be decrypted by the backward key for the target unit. The backward key for the target unit is generated from the forward key for the target unit, and the second ciphertext is ciphertext that is encrypted with a public key of the owner of the target unit and decrypted with a private key of the owner.

Therefore, when ownership of the target unit is transferred to the consumer, the consumer may acquire the forward key of the target unit by decrypting the second ciphertext included in the second transaction information using the private key, and acquire the backward key of the target unit from the forward key of the target unit. The consumer may use the backward key of the target unit to decrypt the first ciphertext included in the first and second transaction information, thereby confirming the ownership information on the target unit.

Conversely, the manufacturer may use the forward key of the target unit to acquire the backward key of the target unit, and use the backward key of the target unit to decrypt the first ciphertext included in the second transaction information, thereby confirming the ownership information of the target unit.

According to one embodiment of the present disclosure, privacy for transaction information can be ensured using encrypted ownership information and a zero-knowledge proof algorithm.

In addition, according to one embodiment of the present disclosure, a key for decrypting encrypted ownership information can be provided to a consumer who has purchased a product, thereby allowing the consumer to track a logistics movement path and confirm the authenticity of the product.

The above-described technical content may be implemented in the form of program instructions that can be executed through various computer means and may be recorded on a computer-readable medium. The computer-readable medium may include a program command, a data file, a data structure, or the like, or a combination thereof. The program command recorded in the computer-readable medium may be specially designed and configured for an exemplary embodiment of the present disclosure, or may be known and used by a person skilled in the field of computer software. A computer-readable recording medium exemplarily includes magnetic media such as hard disks, floppy disks, and magnetic tapes; optical media such as compact disc-read only memories (CD-ROMs) and digital versatile discs (DVDs); magneto-optical media such as floptical disks; and hardware devices such as a read-only memory (ROM), a random access memory (RAM), and a flash memory, which are specially configured to store and execute program instructions. Examples of the program instructions include not only machine language codes created by a compiler or the like, but also high-level language codes that can be executed by a computer using an interpreter or the like. The above hardware devices may be configured to operate as one or more software modules to perform the processes of the present disclosure, and vice versa.

In the foregoing discussion, although the present disclosure has been described in connection with the specific matters, such as the specific components, the various embodiments, and the drawings, they are provided only for assisting in the understanding of the present disclosure, and the present disclosure is not limited to the embodiments. It will be apparent that those skilled in the art can make various modifications and changes thereto from these descriptions. Therefore, the spirit of the present disclosure should not be limited to the above-described embodiments, and the appended claims and modifications equal or equivalent thereto will be considered to fall within the scope of the present disclosure.

## Claims

1. A logistics management method using a blockchain, comprising:
generating first transaction information for registration of a target unit including at least one child unit;
transmitting the first transaction information to a blockchain network;
generating second transaction information according to transfer of ownership of the target unit; and
transmitting the second transaction information to the blockchain network.

2. The logistics management method of claim 1, wherein the first transaction information includes a commitment value and first ciphertext for the target unit,
the commitment value for the target unit includes identification information on the target unit, a forward key for the target unit, ownership information on the target unit, and unpacking information of the target unit, and
the first ciphertext for the target unit includes identification information on the target unit, the commitment value, an opening key for the commitment value, the ownership information, and logistics stage information.

3. The logistics management method of claim 2, wherein the second transaction information includes second ciphertext for a forward key of the target unit and includes the commitment value and first ciphertext for the target unit in which the ownership information on the target unit and the logistics stage information are updated.

4. The logistics management method of claim 3, wherein the first ciphertext for the target unit is decrypted with a backward key for the target unit,
the backward key for the target unit is generated from the forward key for the target unit, and
the second ciphertext for the target unit is encrypted with a public key of an owner of the target unit and decrypted with a private key of the owner.

5. The logistics management method of one of claims 1 to 4, further comprising:
generating third transaction information according to unpacking of the target unit; and
transmitting the third transaction information to the blockchain network.

6. The logistics management method of claim 5, wherein the third transaction information includes the second ciphertext for the forward key of the target unit and includes the commitment value and first ciphertext in which the unpacking information on the target unit and the logistics stage information are updated.

7. The logistics management method of one of claims 1 to 6, further comprising:
generating fourth transaction information according to the transfer of ownership of the child unit; and
transmitting the fourth transaction information to the blockchain network.

8. The logistics management method of claim 7, wherein the fourth transaction information includes third ciphertext for a backward key of the target unit, second ciphertext for a forward key of the child unit, and a commitment value and first ciphertext for the child unit,
the commitment value for the child unit includes identification information on the child unit, a forward key for the child unit, and ownership information on the child unit, and
the first ciphertext for the child unit includes the identification information on the child unit, the commitment value, an opening key for the commitment value, and the ownership information and logistics stage information.

9. The logistics management method of claim 8, wherein the first ciphertext for the child unit is decrypted with a backward key for the child unit,
the backward key for the child unit is generated from the forward key for the child unit, the second ciphertext for the child unit is ciphertext that is encrypted with a public key of an owner of the child unit and decrypted with a private key of the owner, and
the third ciphertext for the backward key of the target unit is decrypted with the backward key for the child unit.

10. The logistics management method of one of claims 1 to 9, wherein the second to fourth transaction information includes a zero-knowledge proof value for verifying the validity of the second to fourth transaction information.

11. A logistics management method using a blockchain, comprising:
generating first transaction information for registration of a target unit including at least one product;
transmitting the first transaction information to a blockchain network;
generating second transaction information according to transfer of ownership of the target unit; and
transmitting the second transaction information to the blockchain network.

12. The logistics management method of claim 11, wherein the first transaction information includes a commitment value and first ciphertext for the target unit,
the commitment value includes identification information on the target unit, a forward key for the target unit, and ownership information on the target unit, and
the first ciphertext includes the identification information on the target unit, the commitment value, an opening key for the commitment unit, and the ownership information.

13. The logistics management method of claim 12, wherein the second transaction information includes second ciphertext for the forward key of the target unit and includes the commitment value and first ciphertext for the target unit in which the ownership information on the target unit is updated.

14. The logistics management method of claim 13, wherein the first ciphertext is decrypted with a backward key for the target unit,
the backward key for the target unit is generated from the forward key of the target unit, and
the second ciphertext is ciphertext that is encrypted with a public key of an owner of the target unit and decrypted with a private key of the owner.

15. A logistics management apparatus using a blockchain, comprising:
a communication unit;
a memory; and
at least one processor electrically connected to the memory,
wherein the processor generates first transaction information for registration of a target unit including at least one product and second transaction information according to transfer of ownership of the target unit, and
the communication unit transmits the first and second transaction information to a blockchain network.
